# EUROPÄISCHE PATENTANMELDUNG

(11) **EP 2 515 229 A1**
(43) Veröffentlichungstag der Anmeldung: **24.10.2012**
(21) Anmeldenummer: 11163488.7
(22) Anmeldetag: 21.04.2011
(51) Int. Cl.: G06F 9/44

(54) **Softwarewerkzeug für die Automatisierungstechnik**

(71) Anmelder: SIEMENS AKTIENGESELLSCHAFT, 80333 München (DE)
(72) Erfinder: Pohlan, Rudolf, 76337, Waldbronn (DE)

(57) **Zusammenfassung**

Die Erfindung betrifft ein Softwarewerkzeug für die Automatisierungstechnik mit einer Funktionalität zur Ausgabeumsetzung (28), wobei mit dem Softwarewerkzeug gleichzeitig eine Mehrzahl von jeweils für eine eigene Objektdomäne vorgesehenen Applikationen (20, 22) kombiniert oder kombinierbar ist, wobei jede Applikation (20, 22) zumindest eine erste Softwareschnittstelle (26) zum Zugriff auf die Ausgabeumsetzung (28) umfasst und wobei die Ausgabeumsetzung (28) zumindest eine Abbildungskomponente (30, 32, 34) zur Umsetzung von Objekten (40, 42, 44; 46, 48, 50) aus einer Objektdomäne der Applikation (20, 22) in ein Objekt (36, 38, 39) eines für die Ausgabekomponente (24) definierten abstrakten Objektmodells umfasst.

## Beschreibung

Die Erfindung betrifft ein Softwarewerkzeug für die Automatisierungstechnik. Als Softwarewerkzeuge für die Automatisierungstechnik werden insbesondere Planungssysteme, Engineeringsysteme, Debugger, etc. verstanden.

Softwarewerkzeuge für die Automatisierungstechnik sind an sich bekannt. Die Anmelderin bietet z. B. unter der Marke STEP bekannte Engineeringsysteme für die Automatisierungstechnik zum Erstellen von Automatisierungsprogrammen für Automatisierungsgeräte, z. B. speicherprogrammierbare Steuerungen oder dergleichen, an. Ein solches Engineeringsystem, mit dem der Endanwender Automatisierungsprogramme erstellt, oder jedes andere Softwarewerkzeug ist selbst ein Softwareprogramm, dessen Erstellung, Pflege und Weiterentwicklung aufgrund der Mächtigkeit der angebotenen Funktionalität einen erheblichen Aufwand darstellt.

Bisher war die Entwicklung solcher Softwarewerkzeuge weitgehend durch Mehrfachentwicklungen geprägt, d. h., eine Funktionalität, die in gleicher oder ähnlicher Weise für verschiedene Softwarewerkzeuge benötigt wurde, wurde für jedes Softwarewerkzeug als proprietäre Applikation realisiert und als solche in das jeweilige Softwarewerkzeug eingebunden. Diese Mehrfachentwicklung ist vor allem im Hinblick auf den stetig zunehmenden Kostendruck ungünstig. Zudem wird vermehrt eine Durchgängigkeit hinsichtlich Bedienung und Benutzerführung (Usability), Darstellung am Bildschirm (Layout), usw., über die verschiedenen Softwarewerkzeuge gefordert.

In wenigen Bereichen gibt es allerdings bei Programmiersystemen in der Automatisierungstechnik schon Softwareverfahren, die einen mehrfachen Einsatz von Programmierwerkzeugen ermöglichen. Ein Beispiel ist ein so genannter Zielsystem-Broker. Dieser delegiert die Kompilierung eines auf einem abstrakten Programmiermodell erstellten Automatisierungsprogramms in Abhängigkeit vom Typ des Automatisierungsgerätes, auf das das Automatisierungsprogramm geladen werden soll, an einen entsprechenden Compiler zur Generierung eines zum jeweiligen Automatisierungsgerät passenden konkreten Automatisierungsprogramms anhand eines jeweils zugrunde liegenden abstrakten Automatisierungsprogramms.

Eine Aufgabe der Erfindung besteht entsprechend darin, ein Softwarewerkzeug für die Automatisierungstechnik sowie ein Verfahren zum Erstellen eines solchen Softwarewerkzeugs anzugeben, das die oben skizzierten Nachteile vermeidet oder zumindest geeignet ist, deren Auswirkungen zu reduzieren.

Diese Aufgabe wird erfindungsgemäß mit den Merkmalen des Anspruchs 1 gelöst. Dazu ist bei einem Softwarewerkzeug für die Automatisierungstechnik mit einer Funktionalität zur Ausgabeumsetzung vorgesehen, dass mit dem Softwarewerkzeug gleichzeitig eine Mehrzahl von jeweils für eine eigene Objektdomäne vorgesehenen Single-Domain Applikationen (Applikation) kombinierbar ist, dass jede derartige Applikation zumindest eine erste Softwareschnittstelle zum Zugriff auf die Ausgabeumsetzung umfasst und dass die Ausgabeumsetzung zumindest eine Abbildungskomponente zur Umsetzung von Objekten aus einer Objektdomäne der jeweiligen Applikation in ein Objekt eines für die Ausgabekomponente definierten abstrakten Objektmodells umfasst.

Der Begriff Single-Domain Applikationen wird auch im Folgenden verwendet. Als Single-Domain Applikationen wird dabei eine jeweils zur Be- und/oder Verarbeitung von Objekten genau einer Objektdomäne bestimmte Applikation verstanden. Eine Single-Domain Applikation wird nachfolgend mitunter kurz auch nur als Applikation bezeichnet. Dadurch, dass das Softwarewerkzeug mit einer Mehrzahl derartiger Applikationen, also zumindest einer derartigen Applikation oder zwei oder mehr derartigen Applikationen, kombinierbar ist, lässt sich die Funktionalität des Softwarewerkzeugs jederzeit dynamisch um weitere Funktionalität erweitern, nämlich um die Funktionalität der jeweiligen, über die erste Softwareschnittstelle an die Ausgabeumsetzung angebundenen oder anbindbaren Applikation. Dies stellt den wesentlichen Vorteil der Erfindung dar. Das Softwarewerkzeug wird damit zu einem offenen und universellen System, in das der Benutzer je nach Anwendungssituation die jeweils benötigte Funktionalität integriert. Das Softwarewerkzeug wird je nach Anzahl der eingebundenen derartigen Applikationen zu einem Multidomain-Softwarewerkzeug. Für den Entwickler solcher Softwarewerkzeuge ergibt sich der Vorteil, dass bestimmte Funktionalität, z. B. Ausgabefunktionalität, nur einmal implementiert sein muss und mehrfach verwendbar ist. Speziell bei der Mehrfachverwendung einer bestimmten Ausgabefunktionalität ergibt sich auch ein einheitliches Erscheinungsbild der Ausgaben unterschiedlichster Funktionalitäten des Softwarewerkzeugs.

Vorteilhafte Ausgestaltungen der Erfindung sind Gegenstand der Unteransprüche. Dabei verwendete Rückbeziehungen weisen auf die weitere Ausbildung des Gegenstandes des Hauptanspruches durch die Merkmale des jeweiligen Unteranspruches hin; sie sind nicht als ein Verzicht auf die Erzielung eines selbständigen, gegenständlichen Schutzes für die Merkmalskombinationen der rückbezogenen Unteransprüche zu verstehen. Des Weiteren ist im Hinblick auf eine Auslegung der Ansprüche bei einer näheren Konkretisierung eines Merkmals in einem nachgeordneten Anspruch davon auszugehen, dass eine derartige Beschränkung in den jeweils vorangehenden Ansprüchen nicht vorhanden ist.

Eine Ausführungsform des Softwarewerkzeugs zeichnet sich dadurch aus, dass jede Applikation neben der ersten Softwareschnittstelle zumindest eine zweite Softwareschnittstelle zum Zugriff auf eine Datenbasisumsetzung umfasst und dass die Datenbasisumsetzung zumindest eine Abbildungskomponente oder eine Mehrzahl von Abbildungskomponenten zur Umsetzung von Objekten aus der Objektdomäne der Applikation in ein Objekt eines für eine Datenplattform definierten Objektmodells umfasst. Dann können Daten einer Applikation oder der einzelnen Applikationen des Softwarewerkzeugs in unterschiedlichen Formaten in einer jeweiligen Datenplattform z. B. abgespeichert werden, und zwar unabhängig von der Objektdomäne, in der die Applikation arbeitet.

Wenn das Softwarewerkzeug gleichzeitig eine Mehrzahl von Applikationen der hier und nachfolgend beschriebenen Art umfasst, von denen also jede Applikation für genau eine Objektdomäne vorgesehen ist, ergibt sich ein Multidomain-Softwarewerkzeug, bei dem die Unterstützung mehrerer Objektdomänen für den Anwender des Softwarewerkzeugs vollkommen transparent ist.

Bei einem Verfahren zum Betrieb eines Softwarewerkzeugs, wie hier und nachfolgend beschrieben, ist bei Verwendung einer von dem Softwarewerkzeug umfassten oder in das Softwarewerkzeug integrierten Applikation vorgesehen, dass für diese und für deren Objektdomäne angelegte Objekte durch Verwendung der ersten Softwareschnittstelle und Aufruf der Ausgabeumsetzung über die erste Softwareschnittstelle eine Umsetzung von Objekten aus einer Objektdomäne der Applikation jeweils in ein Objekt eines für die Ausgabekomponente definierten abstrakten Objektmodells erfolgt.

Bei einem Softwarewerkzeug, bei dem die damit kombinierbaren Applikationen die oben genannte erste Softwareschnittstelle und gleichzeitig eine zweite Softwareschnittstelle aufweisen, ist bei Verwendung einer von dem Softwarewerkzeug umfassten oder in das Softwarewerkzeug integrierten Applikation vorgesehen, dass für diese und für deren Objektdomäne angelegte Objekte durch Verwendung der zweiten Softwareschnittstelle und Aufruf der Datenbasisumsetzung über die zweite Softwareschnittstelle eine Umsetzung von Objekten aus einer Objektdomäne der Applikation jeweils in ein Objekt eines für eine Datenplattform definierten Objektmodells erfolgt.

Die oben genannte Aufgabe wird auch mit einem Programmiergerät, einem Personal-Computer, usw. gelöst, das bzw. der nach dem Verfahren, wie hier und im Folgenden beschrieben, arbeitet und dazu Mittel zur Durchführung des Verfahrens umfasst. Die Erfindung ist dabei bevorzugt in Software implementiert. Die Erfindung ist damit einerseits auch ein Computerprogramm mit durch einen Computer ausführbaren Programmcodeanweisungen zur Realisierung des Verfahrens und andererseits ein Speichermedium mit einem derartigen Computerprogramm sowie schließlich auch ein Automatisierungsgerät, Programmiergerät oder dergleichen, in dessen Speicher als Mittel zur Durchführung des Verfahrens und seiner Ausgestaltungen ein solches Computerprogramm geladen oder ladbar ist. Im Betrieb eines derartigen Geräts ist das Computerprogramm in an sich bekannter Art und Weise durch eine von dem Gerät umfasste Verarbeitungseinheit in Form oder nach Art eines Mikroprozessors ausführbar.

Nachfolgend wird ein Ausführungsbeispiel der Erfindung anhand der Zeichnung näher erläutert. Einander entsprechende Gegenstände oder Elemente sind in allen Figuren mit den gleichen Bezugszeichen versehen.

Das oder jedes Ausführungsbeispiel ist nicht als Einschränkung der Erfindung zu verstehen. Vielmehr sind im Rahmen der vorliegenden Offenbarung zahlreiche Abänderungen und Modifikationen möglich, insbesondere solche Varianten und Kombinationen, die z. B. durch Kombination oder Abwandlung von einzelnen in Verbindung mit den im allgemeinen oder speziellen Beschreibungsteil beschriebenen sowie in den Ansprüchen und/oder der Zeichnung enthaltenen Merkmalen bzw. Elementen oder Verfahrensschritten für den Fachmann im Hinblick auf die Lösung der Aufgabe entnehmbar sind und durch kombinierbare Merkmale zu einem neuen Gegenstand oder zu neuen Verfahrensschritten bzw. Verfahrensschrittfolgen führen.

Es zeigen:
- FIG 1: schematisch vereinfacht eine grundlegende Struktur eines Softwarewerkzeugs,
- FIG 2: eine Ausführungsform des Ansatzes gemäß der Erfindung mit mehreren Applikationen zur Implementierung unter-schiedlicher Funktionen in einem Softwarewerkzeug, einer ersten und zweiten Softwareschnittstelle sol-cher Applikationen zum Zugriff auf eine Ausgabe-umsetzung bzw. eine Datenbasisumsetzung und eine Aus-gabekomponente und eine Datenplattform,
- FIG 3: eine mögliche Darstellung von Instanzen von Objekt-typen eines abstrakten Objektmodells einer Ausgabe-komponente sowie
- FIG 4: und
- FIG 5: mögliche Darstellungen von Instanzen von Objekttypen eines abstrakten Objektmodells.

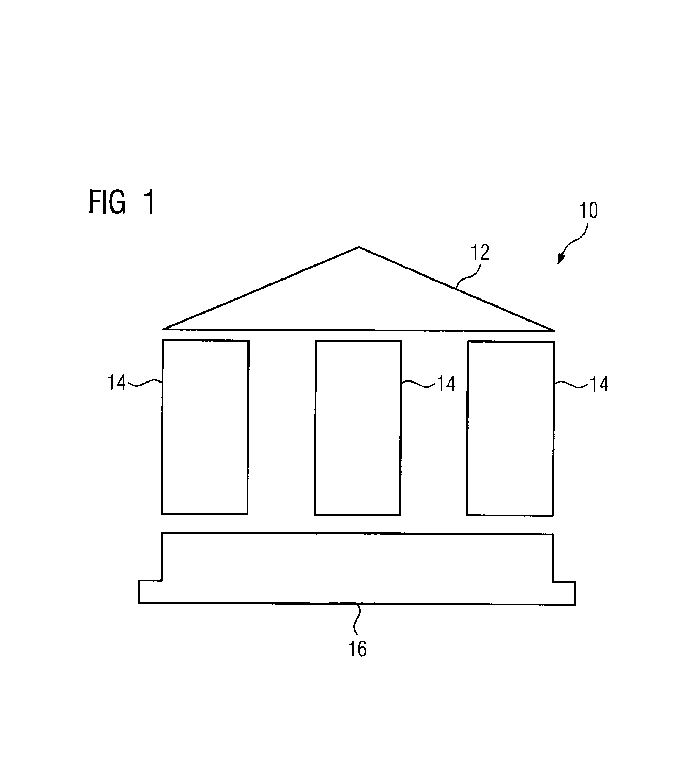

FIG 1 zeigt schematisch stark vereinfacht ein im Folgenden kurz als Engineeringsystem 10 bezeichnetes Softwarewerkzeug mit einem Applikationsrahmen 12 (engl. application framework), zumindest einer Basisapplikation 14 und einem Datenverwaltungssystem 16 (engl. data platform, data base). Die oder jede Basisapplikation 14 stellt z. B. einen Arbeitsbereich mit einem oder mehreren Fenstern bereit. Der Applikationsrahmen 12 bietet üblicherweise ein Menu mit Funktionen, wie z. B. "Objekt einfügen", "Objekt löschen", etc., und Werkzeuge, wie z. B. "Zoom", "Gitternetz ein-/ausschalten", etc., für die Bedienung der jeweiligen Applikation, also zumindest der Basisapplikation 14, an. Die oder jede Basisapplikation 14 verwaltet ihre Daten mit Hilfe des Datenverwaltungssystems 16, um die Daten speichern zu können.

Die Erfindung schlägt nun gegenüber dem in FIG 1 dargestellten, starren Konzept, bei dem evtl. mehrere Basisapplikationen 14 eine eigene Implementation einer an sich gleichen oder gleichartigen Funktionalität umfassen, eine auf eine jeweilige Objektdomäne, die mit einer Applikation bearbeitet werden soll, abgestellte Abstraktion vor. Als Objektdomäne wird dabei ein Gültigkeitsbereich einer vorgegebenen oder vorgebbaren Menge von Objekten oder Objekttypen verstanden, insbesondere eine Menge von Objekttypen, die einen eigenen datentechnischen Sprachraum aufspannt.

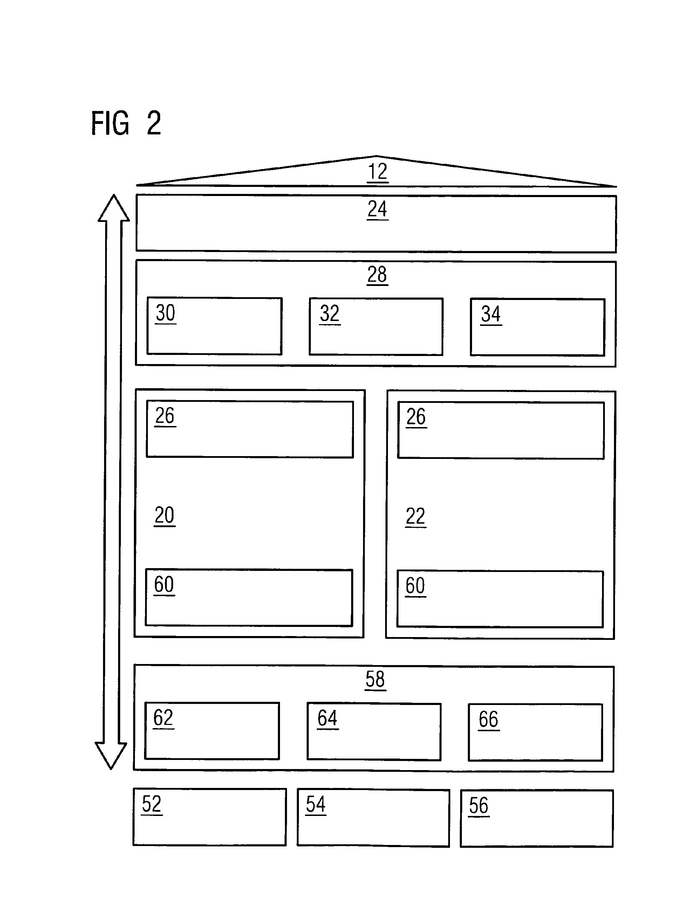

FIG 2 stellt diesen Ansatz schematisch vereinfacht dar. Anstelle einer Basisapplikation 14 oder auch zusätzlich zu einer Basisapplikation 14 oder mehreren Basisapplikationen 14 umfasst das Engineeringsystem 10 (FIG 1) eine oder mehrere Single-Domain Applikationen 20, 22. Eine Single-Domain Applikation 20, 22 wird im Folgenden mitunter auch kurz nur als Applikation 20, 22 bezeichnet. Zwei oder mehr Single-Domain Applikationen 20, 22 stellen sich für einen Verwender eines damit ausgestatteten Softwarewerkzeugs wie eine Multidomain-Applikation dar. Eine etwaige Mehrzahl von Single-Domain Applikationen 20, 22 ist also für den Benutzer vollkommen transparent und das Softwarewerkzeug wird als Multidomain-Softwarewerkzeug wahrgenommen.

Das Engineeringsystem 10 umfasst eine Ausgabekomponente 24 (UI-Komponente) und jede Single-Domain Applikation 20, 22 bedient sich dieser Ausgabekomponente 24. Für die Single-Domain Applikation 20, 22 ist dabei genau eine Ausgabekomponente 24 vorhanden, die von allen oder zumindest mehreren Single-Domain Applikationen 20, 22 gemeinsam genutzt wird. Die Ausgabekomponente 24 basiert auf einem abstrakten Objektmodell (UI Objektmodell), das losgelöst von konkreten Objektdomänen definiert ist. Das abstrakte Objektmodell der Ausgabekomponente 24 beschränkt sich üblicherweise auf graphische Zeichenobjekte.

Jede Single-Domain Applikation 20, 22 umfasst zum Zugriff auf die Ausgabekomponente 24 eine dafür vorgesehene Softwareschnittstelle (erste Softwareschnittstelle 26). Diese erste Softwareschnittstelle 26 erlaubt einen Zugriff auf eine im Folgenden als Ausgabeumsetzung 28 (Mapper) bezeichnete Funktionalität. Die Ausgabeumsetzung 28 übernimmt die Abbildung von Objekten aus der Objektdomäne der jeweiligen Applikation 20, 22 in das Objektmodell der Ausgabekomponente 24. Eine Besonderheit dieser Ausgabeumsetzung 28, also einer entsprechenden, in Software implementierten Funktionalität des Softwarewerkzeugs, besteht darin, dass eine grundsätzlich beliebige Anzahl von Objektdomänen unterstützt werden kann und dass für jede unterstützte Objektdomäne eine Abbildung in das Objektmodell der Ausgabekomponente 24 erfolgt. Dazu umfasst die Ausgabeumsetzung 28 eine entsprechende Mehrzahl von Abbildungskomponenten 30, 32, 34, wobei jede Abbildungskomponente 30, 32, 34 eine Umsetzung von Objekten zumindest einer Objektdomäne in das Objektmodell der Ausgabekomponente 24 erlaubt.

Nachfolgend wird der Ansatz gemäß der Erfindung am Beispiel eines Verschaltungseditors als Multidomain-Situation erläutert. Ein einfacher Verschaltungseditor zeichnet Kästchen, Konnektoren und graphische Verbindungslinien zwischen den Konnektoren.

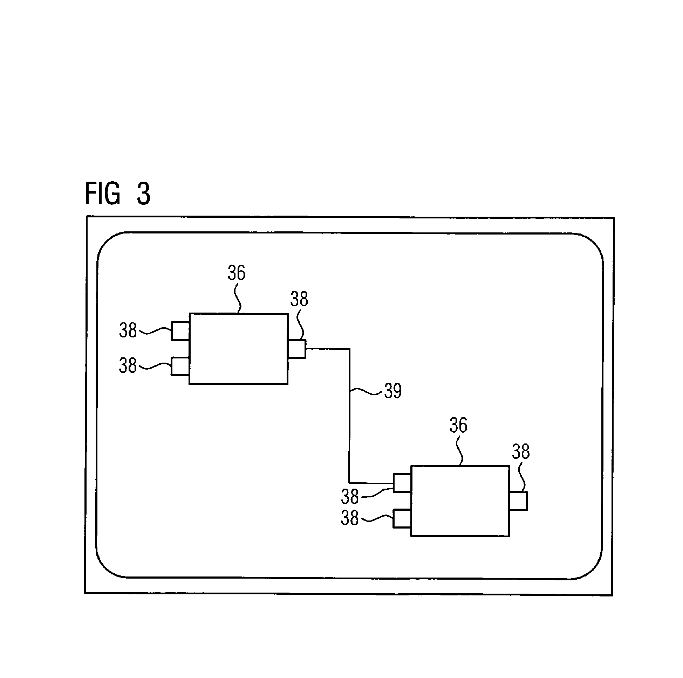

Ein abstraktes Objektmodell der Ausgabekomponente 24 umfasst (in einem UI Objektmodell) damit zumindest die drei folgenden Objekttypen: Graphisches Kästchen 36, graphischer Konnektor 38 und graphische Verbindungslinie 39. Eine Darstellung von Instanzen solcher Objekttypen findet sich in FIG 3.

In dem Beispiel anhand des Verschaltungseditors werden folgende zwei Domänenmodelle unterschieden: Datenflussmodell und Signalflussmodell. Für jedes Domänenmodell ist genau eine eigene Applikation 20, 22 (FIG 2) als Single-Domain Applikation vorgesehen.

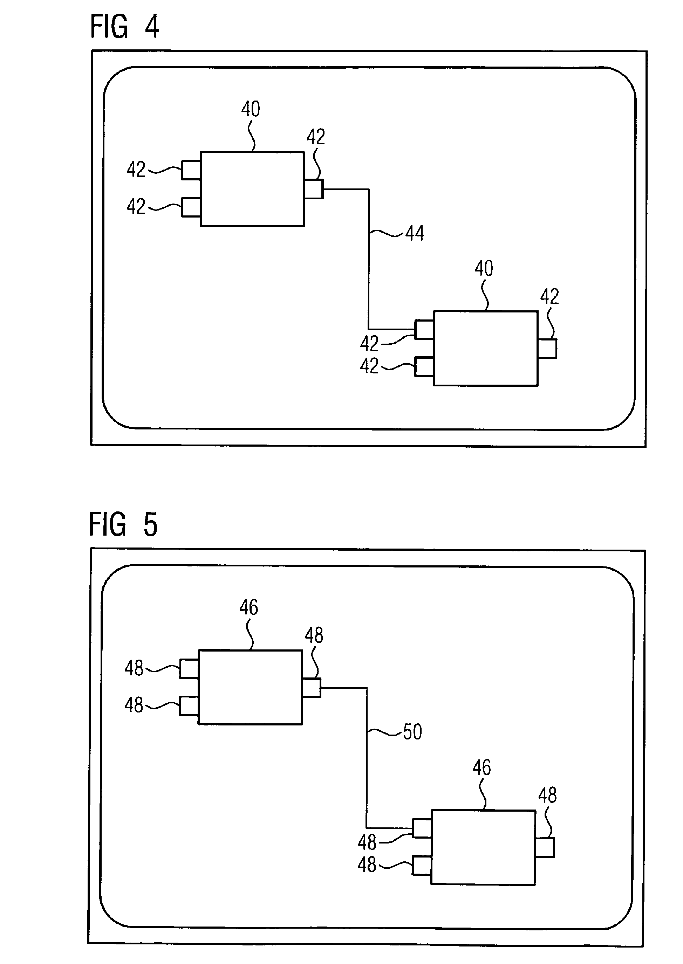

Das Datenflussmodell basiert auf einer Objektdomäne mit zumindest den drei folgenden Objekttypen (FIG 4): Datenbaustein 40, Datenbausteinelement 42 und Datenzuweisung 44. Das Datenflussmodell kommt für Engineeringsysteme für die Automatisierungstechnik und dort speziell für Entwicklungsumgebungen zur Erstellung von Automatisierungsprogrammen auf Basis spezieller Programmiersprachen für die Automatisierungstechnik, nämlich z. B. FUP oder CFC, in Betracht.

Das Signalflussmodell basiert auf einer Objektdomäne mit zumindest den drei folgenden Objekttypen (FIG 5): Einzelsteuereinheit 46 (z. B. Ventil, Motor, Regler, usw.), Steuervariable/Prozessvariable 48 (z. B. Drehzahl, Ventil geschlossen, etc.) und Signalverbindung 50. Das Signalflussmodell kommt ebenfalls für Engineeringsysteme für die Automatisierungstechnik und dort speziell für Entwicklungsumgebungen zum Erstellen von Signalflussplänen gemäß verfahrenstechnischer Standards oder Normen in Betracht.

Die Unterstützung der beiden hier exemplarisch herangezogenen Domänenmodelle "Datenfluss" und "Signalfluss" wird durch zwei entsprechende Abbildungskomponenten 30, 32, 34 der Ausgabeumsetzung 28 erreicht.

Eine Funktionalität einer ersten derartigen Abbildungskomponente 30 zur Umsetzung von Objekten aus der Objektdomäne "Datenfluss" in das Objektmodell der Ausgabekomponente 24 kann durch die softwaremäßige Implementierung der folgenden Zuordnungen beschrieben werden:
Graphisches Kästchen <--> Datenbaustein
Graphischer Konnektor <--> Datenbausteinelement
Graphische Verbindungslinie <--> Datenzuweisung.

Entsprechend kann eine Funktionalität einer zweiten derartigen Abbildungskomponente 32 zur Umsetzung von Objekten aus der Objektdomäne "Signalfluss" in das Objektmodell der Ausgabekomponente 24 durch die softwaremäßige Implementierung der folgenden Zuordnungen beschrieben werden:
Graphisches Kästchen <--> Einzelsteuereinheit
Graphischer Konnektor <--> Steuervariable/Prozessvariable
Graphische Verbindungslinie <--> Signalverbindung.

Hinzuweisen ist allerdings darauf, dass in den hier gewählten Beispielen nur zufällig die Situation vorliegt, dass jedes Modell genau drei Objekttypen umfasst. Bei anderen Objektdomänen kann es auch eine größere oder kleinere Anzahl von Objekttypen und entsprechend eine n-m Zuordnung geben. Zur Implementierung der soeben beschriebenen Zuordnungen oder Abhängigkeitsbeziehungen kommt eine so genannte LUT (Lookup-Table) oder Ähnliches in Betracht.

Ein für eine Applikation 20, 22 und in deren Objektdomäne angelegtes (instanziiertes) Objekt der jeweiligen Objektdomäne bleibt mit einer Kennzeichnung versehen, die auf den jeweils zugrunde liegenden Objekttyp hinweist, also z. B. auf den Objekttyp für einen Datenbaustein 40. Die Kennzeichnung kann numerisch oder alphanumerisch oder in sonst geeigneter Weise erfolgen. Hier wird ohne Verzicht auf eine weiter gehende Allgemeingültigkeit angenommen, dass die Kennzeichnung alphanumerisch erfolgt und jeweils im Klartext die oben bereits erwähnten Namen der Objekttypen, also z. B. "Datenbaustein", "Datenbausteinelement" und "Datenzuweisung" umfasst. Die der Darstellung in FIG 4 zugrunde liegenden Daten könnten demnach wie folgt aussehen:

```
   DB1 ( = "Datenbaustein")
      INPUT:
         I1 ( = "Datenbausteinelement")
         12 ( = "Datenbausteinelement")
      OUTPUT:
         O1 ( = "Datenbausteinelement")
   DB2 ( = "Datenbaustein")
      INPUT:
         I1 ( = "Datenbausteinelement")
         I2 ( = "Datenbausteinelement")
      OUTPUT:
         O1 ( = "Datenbausteinelement")
   C ( = "Datenzuweisung")
      START
         DB1, 01
      END
         DB2, I1
```

Bei der Interpretation solcher Daten kann in diesem Fall die erste Abbildungskomponente 30 anhand der gemäß dem Beispiel im Klartext mitgeführten Kennzeichnungen der Objekte (genauer der Kennzeichnungen der den Objekten zugrunde liegenden Objekttypen) die jeweils passende Zuordnung auswählen, indem dafür z. B. in einer LUT die entsprechende Kennzeichnung gesucht wird und das mit dieser Kennzeichnung assoziierte Objekt im Objektmodell der Ausgabekomponente 24 identifiziert wird. Zur Darstellung des "DB1" genannten Objektes auf Basis des Objekttyps "Datenbaustein" kann dann die dem Objekttyp "Kästchen" in dem Objektmodell der Ausgabekomponente 24 zugeordnete Funktionalität aufgerufen und ausgeführt werden. Für alle anderen Objekte und die jeweils zugrunde liegenden Objekttypen gilt dieses Prinzip entsprechend. Weiterhin gilt dieses Prinzip auch entsprechend für andere (Ursprungs-) Objektdomänen, hier also z. B. auch die Objektdomäne "Signalflussmodell".

Dadurch, dass jede Applikation 20, 22 eine erste Softwareschnittstelle 26 zum Zugriff auf die Ausgabeumsetzung 28 umfasst, kann das gesamte Softwarewerkzeug, also z. B. das Engineeringsystem 10 (FIG 1), jederzeit mit weiteren Applikationen 20, 22 ergänzt werden, um zusätzliche Funktionalität bereitzustellen. Ebenso kann grundsätzlich auch die Ausgabeumsetzung 28 jederzeit erweitert werden, indem zusätzliche Abbildungskomponenten 30 ergänzt werden.

Zur Datenhaltung, also speziell zum Laden und zum Abspeichern von für eine Applikation 20, 22 in deren Objektdomäne angelegten Objekte, ist bei der in FIG 2 dargestellten Ausführungsform ebenfalls eine Umsetzung vorgesehen. Damit ist eine Konvertierung der Daten vom und in ein Format unterschiedlichster Datenplattformen 52, 54, 56 möglich. Eine Datenplattform 52, 54, 56 erlaubt softwaretechnische, abfragende oder manipulierende Zugriffe auf eine Datenbasis, insbesondere eine Datenbank. Eine Datenplattform 52, 54, 56 umfasst daher oder hat zumindest Zugriff auf eine nicht separat dargestellte Datenbank.

Jede Applikation 20, 22 weist zum Aufruf einer im Folgenden als Datenbasisumsetzung 58 bezeichneten Funktionalität, mit der diese Umsetzung implementiert ist, eine zweite Softwareschnittstelle 60 auf. Die Datenbasisumsetzung 58 umfasst ein oder mehrere Abbildungskomponenten 62, 64, 66, deren Funktionalität hinsichtlich des Aspekts der Umsetzung von Objekten aus einer Objektdomäne in Objekte einer Datenplattform vom Prinzip her der Funktionalität der Abbildungskomponenten 30, 32, 34 der Ausgabeumsetzung 28 entspricht. Es wird also ein Objekt in der jeweiligen Objektdomäne der Applikation 20, 22 in ein korrespondierendes Objekt entsprechend dem jeweiligen Objektmodell der Datenplattform 52, 54, 56 umgesetzt und umgekehrt. Zum Abspeichern von Objekten der Objektdomäne der jeweiligen Applikation 20, 22 werden diese in das Objektmodell der Datenplattform 52, 54, 56 umgesetzt und an die Datenplattform 52, 54, 56 übergeben, so dass unmittelbar ein Abspeichern erfolgen kann. Zum Laden von Objekten aus einer Datenplattform 52, 54, 56 in die Objektdomäne der jeweiligen Applikation 20, 22 erfolgt zunächst ein Abruf der entsprechenden Daten aus der Datenplattform 52, 54, 56 und anschließend deren Umwandlung aus dem Objektmodell der Datenplattform 52, 54, 56 in das Objektmodell der Applikation 20, 22.

Die Datenbasisumsetzung 58 mit ihren Abbildungskomponenten 62, 64, 66 eignet sich darüber hinaus auch im Besonderen für einen Übergang zu einer veränderten Datenablage bei neuen Softwaregenerationen. Alte Datenformate und ein oder mehrere, mit einer neuen Softwaregeneration hinzukommende Datenformate können über die Datenbasisumsetzung 58 und jeweilige Abbildungskomponenten 62, 64, 66 unterstützt werden.

Mit den in FIG 2 durch den seitlich dargestellten Blockpfeil umfassten Komponenten kann eine Integration in ein Engineeringsystem 10 (FIG 1) oder dergleichen erfolgen, indem die jeweiligen Komponenten quasi zwischen Applikationsrahmen 12 und Datenverwaltungssystem 16 eingefügt werden.

Einzelne im Vordergrund stehende Aspekte der hier eingereichten Beschreibung lassen sich damit kurz wie folgt zusammenfassen: Mit dem Ansatz gemäß der Erfindung lässt sich ein Softwarewerkzeug für die Automatisierungstechnik dynamisch um zusätzliche Applikationen 20, 22 erweitern. Alle derartigen Applikationen 20, 22 nutzen gemeinsam eine Ausgabekomponente 24, deren Funktionalität entsprechend von dem Softwarewerkzeug nur einmal umfasst ist (im Gegensatz zu einer bisher zumindest teilweise bestehenden Implementierung solcher Funktionen in jeder von einem Softwarewerkzeug umfassten Applikation mit Ausgabefunktionalität). Wenn ein Nutzer des Softwarewerkzeugs zu einem späteren Zeitpunkt weitere Funktionalität benötigt, erhält oder erwirbt er eine weitere Applikation 20, 22, die mit ihrer ersten Softwareschnittstelle 26 oder ihrer ersten und zweiten Softwareschnittstelle 26, 60 unmittelbar auf die Ausgabeumsetzung 28 bzw. die Ausgabe- und die Datenbasisumsetzung 28, 58 zugreifen kann, so dass eine Integration in das Softwarewerkzeug ohne Probleme möglich ist.

## Patentansprüche

1. Softwarewerkzeug für die Automatisierungstechnik mit einer Funktionalität zur Ausgabeumsetzung (28),
wobei mit dem Softwarewerkzeug gleichzeitig eine Mehrzahl von jeweils für eine eigene Objektdomäne vorgesehenen Applikationen (20, 22) kombiniert oder kombinierbar ist,
wobei jede Applikation (20, 22) zumindest eine erste Softwareschnittstelle (26) zum Zugriff auf die Ausgabeumsetzung (28) umfasst und wobei die Ausgabeumsetzung (28) zumindest eine Abbildungskomponente (30, 32, 34) zur Umsetzung von Objekten (40, 42, 44; 46, 48, 50) aus einer Objektdomäne der Applikation (20, 22) in ein Objekt (36, 38, 39) eines für die Ausgabekomponente (24) definierten abstrakten Objektmodells umfasst.

2. Softwarewerkzeug nach Anspruch 1, wobei jede Applikation (20, 22) zumindest eine zweite Softwareschnittstelle (60) zum Zugriff auf eine Datenbasisumsetzung (58) umfasst und wobei die Datenbasisumsetzung (58) zumindest eine Abbildungskomponente (62, 64, 66) zur Umsetzung von Objekten (40, 42, 44; 46, 48, 50) aus einer Objektdomäne der Applikation (20, 22) in ein Objekt eines für eine Datenplattform (52, 54, 56) definierten Objektmodells umfasst.

3. Softwarewerkzeug nach einem der Ansprüche 1 oder 2, das gleichzeitig eine Mehrzahl von Applikationen (20, 22), von denen jede für genau eine Objektdomäne vorgesehen ist, umfasst.

4. Verfahren zum Betrieb eines Softwarewerkzeugs nach einem der vorangehenden Ansprüche, wobei bei Verwendung einer von dem Softwarewerkzeug umfassten oder in das Softwarewerkzeug integrierten Applikation (20, 22) für diese und für deren Objektdomäne angelegte Objekte (40, 42, 44; 46, 48, 50) durch Verwendung der ersten Softwareschnittstelle (26) und Aufruf der Ausgabeumsetzung (28) über die erste Softwareschnittstelle (26) eine Umsetzung von Objekten (40, 42, 44; 46, 48, 50) aus einer Objektdomäne der Applikation (20, 22) in ein Objekt (36, 38, 39) eines für die Ausgabekomponente (24) definierten abstrakten Objektmodells erfolgt.

5. Verfahren nach Anspruch 4, wobei bei Verwendung einer von dem Softwarewerkzeug umfassten oder in das Softwarewerkzeug integrierten Applikation (20, 22) für diese und für deren Objektdomäne angelegte Objekte (40, 42, 44; 46, 48, 50) durch Verwendung der zweiten Softwareschnittstelle (60) und Aufruf der Datenbasisumsetzung (58) über die zweite Softwareschnittstelle (60) eine Umsetzung von Objekten (40, 42, 44; 46, 48, 50) aus einer Objektdomäne der Applikation (20, 22) in ein Objekt eines für eine Datenplattform (52, 54, 56) definierten Objektmodells erfolgt.

6. Computerprogramm mit durch einen Computer ausführbaren Programmcodeanweisungen zur Implementierung des Verfahrens nach einem der Ansprüche 4 oder 5, wenn das Computerprogramm auf einem Computer ausgeführt wird.

7. Speichermedium mit einem durch einen Computer ausführbaren Computerprogramm gemäß Anspruch 6.

8. Automatisierungsgerät mit einem Speicher, in den ein Computerprogramm nach Anspruch 6 geladen ist.
